# EUROPÄISCHE PATENTANMELDUNG

(11) **EP 2 003 610 A1**
(43) Veröffentlichungstag der Anmeldung: **17.12.2008**
(21) Anmeldenummer: 08104374.7
(22) Anmeldetag: 11.06.2008
(51) Int. Cl.: G06Q 40/00

(54) **Notfallinterventionssystem und entsprechendes Verfahren zur automatisierten Behebung von Betriebsstörungen bei Transportmittel**

(30) Priorität: 11.06.2007 WO PCT/EP2007/005128
(71) Anmelder: Swiss Reinsurance Company, 8022 Zurich (CH)
(72) Erfinder: Claudine, Delavy, London E1W 2PB (GB); Stahel, Michael, Raemismühle-Zell 8487 (CH)
(74) Vertreter: Braun, André jr.

(57) **Zusammenfassung**

Vorgeschlagen wird ein Notfallinterventionssystem und Verfahren zur automatisierten Behebung von Betriebsstörungen bei Transportmittel (41). Mittels einer Sensorik (401) eines Nottallinterventionssystems (80) werden sich ereignende Betriebsstörungen detektiert und mittels einer Aktivierungsvorrichtung (203) basierend auf einer detektierten Betriebsstörung dedizierte Aktivierungssignaldaten generiert. Die Aktivierungssignaldaten werden auf ein entsprechendes, automatisiertes Interventionsmittel (40) übertragen werden, mittels welchem die Betriebsstörung behoben wird. Eine Schaltmoduls (104) der Notfallinterventionssystem (80) schaltet die Aktivierungsvorrichtung (203) frei, falls ein kumulierter Stapelspeicherhöhenwert zweier Stapelspeicher (102/202) einen definierten kumulierten Stapelspeicherhöhenwert erreicht wird. Die zwei Stapelspeicher (102/202) werden vorgängig basierend auf von Netzwerkeinheiten übertragenen Aktivierungsparameter inkrementiert und entsprechend den dedizierte Aktivierungssignaldaten während der Freischaltung dekrementiert. Nach Ablauf eines vordefinierbaren Zeitfensters wird das Notfollinterventionssystem (80) mittels eines Clearingmoduls zurückgesetzt und die Freischaltung mittels Schaltmodul (104) unterbrochen.

## Beschreibung

Die Erfindung betrifft ein Notfallinterventionssystem und Verfahren zur automatisierten Behebung von Betriebsstörungen bei Transportmittel. Mittels einer Sensorik eines Notfallinterventionssystems werden sich ereignende Betriebsstörungen detektiert und mittels einer Aktivierungsvorrichtung basierend auf einer detektierten Betriebsstörung dedizierte Aktivierungssignaldaten generiert. Die Aktivierungssignaldaten werden auf ein entsprechendes, automatisiertes Interventionsmittel übertragen werden, mittels welchem die Betriebsstörung behoben wird.

### Stand der Technik

Bei der differenzierten Signalerzeugung war menschliche Interaktion in vielen Bereichen der Industrie, Technik und Wissenschaft lang Zeit notwendige Voraussetzung, sobald die Komplexität der beteiligten Vorrichtungen, erfassten Messparametern oder zu kontrollierenden Prozessen und Interaktionen mit der Umwelt ein gewisses Mass überschritt. Insbesondere bei der Steuerung, Kontrolle und Überwachung dynamischer und/oder nicht-linearer Prozesse entzog sich eine Automatisierung dem Stand der Technik. Häufig war es insbesondere die Nichtlinearität, welche konventionellen Vorrichtungen den Boden zur Automatisierung entzog. Viele technische Umsetzungen unterschiedlichster Arten von Frühwarn-Vorrichtungen, Bild- und/oder Mustererkennungsvorrichtungen (Pattern-Recognition), insbesondere bei analogen Meßdaten oder bei notwendiger Selbstorganisierung der Vorrichtung, sind in vielen Fällen im Stand der Technik noch heute nicht befriedigend gelöst sind. Die meisten natürlichen Prozesse besitzen mindestens teilweise einen nichtlinearen Ablauf und tendieren ausserhalb eines schmalen linearen Gleichgewichtbereichs zu exponentiellem Verhalten. Eine effiziente und zuverlässig funktionierende Frühwarnsignalerzeugung und automatisierte Betriebsstörungsbehebung kann für viele dieser technischen Einrichtungen deshalb überlebenswichtig sein. Dies geht von komplexen technischen Vorrichtungen wie Flugzeugen, Robotern, Fabrikationsstrassen etc., mit jeweils vielen tausend Sensoren und Meßsignalen, bis zu Überwachungs-, und Steuersystemen basierend auf unkontrollierbaren Umwelteinflüssen, wie meteorlogischen (Stürme, Hurrikans, Überschwemmungen) , geologischen (Erdbeben), wirtschaftbedingten (Börse) Einflüssen.

Die zugrundeliegenden technischen Probleme reichen vom differenzierten, automatisierten Erfassen der Messparameter, ihrer spezifischen Selektion und Filtern und Buffern der Daten, der Real-Time-Gewichtung, Detektion von Korrelationen, der Analyse und dem Triggern bis zur Signalgenerierung, selektiven Aktivierung bzw. Freischaltung von entsprechenden Vorrichtungen sowie eventuellen Rückkoppeln zeitabhängigen, dynamischer Wirkungen der Vorrichtungen. Entzieht sich ein derartiges technische Probleme dem Stand der Technik, spielen zwangsläufig menschliche Interaktion, besonders an den Schnittstellen zwischen zwei technischen Einheiten eine Schlüsselrolle. Die nicht-lineare neuronale Struktur des menschlichen Hirns war lange Zeit an die ebenfalls häufig nicht-linearen Prozesse bei der Problemerkennung, Überwachung, Signalerzeugung oder technischen Abstimmung der Vorrichtungen besser angepasst, als entsprechende technische, automatisierte Vorrichtungen. Heutzutage stößt die menschliche Interaktion jedoch in vielen Bereichen an Grenzen und Probleme, ohne dass der Stand der Technik entsprechenden Ersatz bereit hätte. Zum einen hat die Menge von erfassten Messparametern durch Sensoren, Bilderfassungseinheiten aber auch von vorhandenen, historischen Daten in den letzten Jahren in unvorhersehbarem Ausmass zugenommen. Sie ist nicht vergleichbar mit der Datenmenge, wie sie etwa vor 10 Jahren noch verfügbar war. Häufig erlaubt diese grosse Menge der Messparameter ein gesamtheitliches, zuverlässiges und/oder reproduzierbares Überwachen durch einen Menschen nicht mehr. Zum anderen sind die für die Systeme notwendigen Reaktionszeiten für viele Anwendungen derart kurz geworden, dass eine menschliche Interaktion bei diesen Systemen allein durch die kurzen Reaktionszeiten und/oder die Menge der erfassten Messparameter nicht mehr genügt. Bei Systemen mit einer Real-Time Reaktionszeit als notwendige Voraussetzung für einen optimalen Betrieb, wie z.B. Steuerautomatik und Robotik wird das Gesagte offensichtlich. Einhergehend mit dem Betrieb sollte die Signalerzeugung falls notwendig auch eine dynamische und/oder rückgekoppelte Anpassung des Systems, des Betriebs und/oder der Signalerzeugung ermöglichen. Mittels menschlicher Interaktionen ist dies in vielen technischen Anwendungsbereichen nicht mehr möglich. Die menschliche Interaktion hat bei komplexen Systemen zudem weiter den Nachteil, dass ihre Fehleranfälligkeit in Abhängigkeit der Komplexität nicht linear steigt. Das Verhalten bzw. der Betrieb des Systems wird unvorhersagbar. Unerwarteten Betriebsunterbrüche, Systemabstürze oder Systemcrashes sind die Folge. Dazu gibt es gehäuft Beispiele in neuerer Zeit, wie z.B. systemerzeugte Betriebsunterbrüche bei mit menschlicher Interaktion gekoppelten Systemen. So beispielsweise trotz allen Notfallinterventionsvorrichtungen und -systemen unvorhersehbare Flugzeugabstürze (z.B. MD11-Crash der Swissair vor Halifax am 03.11.98 oder das Flugunglück bei Überlingen im Juli 2002), Börsencrashes mit weltweitem Kollaps von Finanzsystemen und Finanzinstituten etc. etc.

Die oben erwähnten Nachteile haben in der Industrie ein verstärktes Bedürfnis nach Technisierung und Automatisierung mittels effizienten Signalerzeugungs-, Alarm-, Kontroll- und/oder Betriebsinterventionssystemen oder -Vorrichtungen geschaffen, welche solche Ereignisse bzw. deren Auswirkung wirksam abfangen können, ohne dass menschliche Interaktion notwendig wäre. Die Vorrichtungen sollten die Möglichkeit zur dynamischen Selbstorganisation auf veränderte Bedingungen oder veränderte technische Wirkungen von Systemen umfassen. Die differenzierte Messparametererfassung und Signalerzeugung bei entsprechenden Interventionsvorrichtungen zur Behebung von Betriebsstörung und zur dynamischen Aktivierung oder zur Signalübermittlung sollte dabei eine möglichst kurze Reaktionszeit, oder gar eine Reaktionszeit in Realtime aufweisen. Es ist für den Fachmann klar, dass die reine softwäre-mässige Implementierung (wo überhaupt möglich) und/oder Erhöhung der verfügbaren Prozessorleistung (Computing-Power) bei den meisten Systemen zur technischen Umsetzung der Automatisierung nicht reicht. Gerade bei den erwähnten komplexen System mit einem nicht-linearen Prozesshintergrund und einer grossen Menge anfallender Messdaten mit unbekannten Abhängigkeiten und Korrelationen entzieht sich die Technisierung und Automatisierung der blossen, softwarebasierten Implementierung auf einem Rechner. Die technische Umsetzung ist deshalb hier in den wenigsten Fällen für den Fachmann ohne Hilfe in trivialer Weise auffindbar. Dies selbst wenn die verwendeten, einzelnen, technischen Vorrichtungselemente im Stand der Technik bekannt sein sollten. Dies betrifft im speziellen auch die Wirkungsweise dieser Vorrichtungen. Prozessabläufe sind in Wechselwirkung mit komplexen Systemen meist nicht oder schwer simulierbar, so dass das technische Zusammenwirken der benutzen Vorrichtungselemente, auch wenn diese einzeln bekannt oder trivial sein mögen, in ihrer Wirkung und Interaktion auf die Prozessabläufe bzw. die gesteuerten Vorrichtungen für den Fachmann nicht vorhersehbar und nicht trivial sind. Umgekehrt gesagt, da die Wirkung einer Vorrichtung nicht vorhersehbar ist, ist meist die technische Realisierung bzw. Verknüpfung der Vorrichtungselemente, der Selektion der beeinflussenden Parameter etc. bei solchen Prozessen für den Fachmann nicht vorherzusehen und deshalb nicht trivial.

Betriebsstörungen und Betriebsunterbrüche bei sensiblen, automatisierten Systemen sollen mit der vorliegenden Vorrichtung verhindert oder zumindest schnellst möglich detektierbar und behebbar sein. Meist ist es eine notwendige Bedingung für den Betrieb, dass bei solchen Systemen die Möglichkeit des Eintretens von Betriebsstörungen frühzeitig im Sinne eines Frühwarnsystem erkannt und präventiv entgegengewirkt werden. Dabei kann bei solchen Interventionsvorrichtungen nicht nur die Art der Interventionsmittel (z.B. Katastropheneinsatzmittel wie Bau- und Konstruktionsvorrichtungen, Alarmvorrichtungen wie Sirenenregelvorrichtungen, Betriebsstörungsmittel wie Zufuhrvorrichtungen oder Zufuhrregelvorrichtungen (Wasserregelwerke, Treibstoff und Schmierregelwerke, Kanalisationssysteme mit Pumpen- und Schleusenregelvorrichtungen etc.)) eine Rolle spielen, sondern auch die Art, wie die durch die Erfassungsvorrichtungen und Detektionsvorrichtungen gemessenen Kontrollparameter verarbeitet und zur Steuerung von Aktivierungseinheiten für die Interventionsmittel oder Alarmmittel technisch umgesetzt werden. Es ist gerade die technische Umsetzung, die bei heutigen komplexen Systemen mit ebenso komplexen Abhängigkeiten zu kaum überwindbaren technischen Probleme führt.

Eine weitere Schwierigkeit liegt darin, dass die verfügbare Datenmenge aus unterschiedlichsten heterogenen, analogen oder digitalen Erfassungsvorrichtungen und Detektionsvorrichtungen stammen kann, wie beispielsweise Windgeschwindigkeitssensoren, Satellitenbilder, Wasserstandsensoren, Wasser- und Windtemperatursensoren etc.. Ebenso finden sich technische Probleme darin, dass die genannten Signalerzeugungsvorrichtungen, Alarm-, Kontroll- und/oder Betriebsinterventionsvorrichtungen in ihrer Funktion meist nicht nur mit nicht-linearen Prozessen der Umwelt, sondern auch mit dynamisch sich veränderten Prozessen anderer automatisierter oder halb automatisierter Prozesse von Vorrichtungen interferieren oder korrelieren. Die Interaktion selbst kann durchaus auch aus Prozessen z.B. der Börse, Versicherungsindustrie oder von Schadensdeckungs- und Risikokontrollsystemen stammen, die an der Grenze der Patentierung liegen, da sie üblicherweise zu den Geschäftsmethoden gezählt werden. Die differenzierte Signalerzeugungs- und Steuer-/Kontrollvorrichtung selbst ist jedoch stets technisch und wegen ihrer Interaktion in den meisten Fällen für den Fachmann nicht trivial, da er aus dem Funktionieren der möglicherweise bekannten, einzelnen Komponenten der Vorrichtung nicht oder nur schwer auf die Wirkungsweise der Vorrichtung bei Interaktion mit den nicht-linearen Prozessen schliessen kann, oder umgekehrt das notwendige Zusammenwirken der einzelnen Komponenten für die Vorrichtung in trivialer Weise aus den Prozessen schliessen kann.

In der Automobilindustrie sind gekoppelte oder nicht gekoppelte Betriebsstörungsvorrichtungen, Interventionssysteme und entsprechend integrierbare Signalerzeugungs- oder Alarmvorrichtungen ebenso wie Notfallkontroll- oder Betriebsstörungsvorrichtungen im Stand der Technik in unterschiedlichen Variationen bekannt. Die deutsche Patentschrift DE 101 39 616 A1 zeigt ein Beispiel einer Betriebsstörungsvorrichtung, welche bei Betriebsstörungen den Betrieb dynamisch ändert. Weiter ist z.B. auch der Einbau von Kontrollvorrichtungen direkt im Fahrzeug mit Übermittlung von Messsignalen an eine zentrale Kontrollvorrichtung bekannt. Z.B. ist bekannt, zur automatisierten Alarmauslösung von diesen Kontrollvorrichtungen ortabhängige elektrische Signale periodisch oder auf Request (Anfrage) auf eine zentrale Einheit zu übermitteln. Die internationale Patentschrift WO 2004/111962 A2/A3 offenbart ein solche Alarmvorrichtung, wobei mittels Erfassungsvorrichtungen Messparameter erfasst und auf eine Zentraleinheit übermittelt wird, welche bei Betriebsstörungen automatisiert ein Alarmsignal erzeugt und zu den entsprechenden Betriebsinterventionsmittel überträgt. Die deutsche Patentschrift DE 199 51 076 A1 zeigt Signalerzeugungs- und Aktivierungsvorrichtung, bei welcher in Notsituationen Signale an eine zentrale Einheit übermittelt werden, welche entsprechende Steuerbefehle zur Aktivierung von Kommunikations- und Alarmvorrichtungen im Motorfahrzeug generiert. Der Betrieb von Fahrzeugen, wie z.B. Autos, Lastwagen, Booten, Flugzeugen und Ähnliches sind einer Vielzahl von möglichen Betriebsstörungen oder anderen Risikoereignissen ausgesetzt. Beispielsweise verursacht unterschiedliche Nutzung oder Nutzung an unterschiedlichen Orten bei Fahrzeugen oftmals unterschiedliche Arten von Betriebsstörungen und/oder Wahrscheinlichkeiten für Betriebsstörungen. Beispiele für solche Betriebsstörungen sind Unfälle, Verschleiss und/oder Abnutzung aufgrund von schlechten Strassenbedingungen, Umwelteinflüssen (z.B. Hagel etc.) und/oder Gefahren für Personen und Eigentum aufgrund von Verbrechen, wie z.B. Autodiebstahl, Autoentführung, Vandalismus und tätliche Angriffe. Seltener als die bereits angeführten Ursachen für Betriebsstörungen, kann die Nutzung mancher Fahrzeuge auch Risiken für Personen und Eigentum aufgrund von terroristischen Aktivitäten oder Kampfhandlungen mit sich bringen, z.B. in geographischen Regionen mit militärischen oder politischen Konflikten. Die Eigentümer und Betreiber von Fahrzeugen beeinflussen einen grossen Teil des Risikos für Betriebsstörungen, die mit der Nutzung ihrer Fahrzeuge verbunden sind. Ein Eigentümer und Betreiber kann die Wahrscheinlichkeit für Betriebsstörungen durch sorgfältiges Betreiben und richtiges Beurteilen minimieren, z.B. dadurch, dass er vermeidet, im Interesse der Betriebssicherheit oder der persönlichen Sicherheit nachts durch Gebiete mit unerwartbaren Umwelteinflüssen oder hoher Kriminalität zu fahren. Zusätzlich zu den Auswirkungen der Betriebsstörungen für den Eigentümer und/oder Betreiber kann jedoch die Betriebsstörung des Fahrzeuges auch dritte Parteien betreffen, die eine technische oder wirtschaftliche Abhängigkeit zum Fahrzeug oder zu seinem Betrieb haben. Oftmals haben derartige, in zweiter Linie betroffene Parteien wenig oder keine Kontrolle darüber wie ein Betreiber das Fahrzeug nutzt, obwohl diese Parteien durch die Nutzung des Fahrzeuges stark betroffen sein können. Die dynamische Signalgenerierung in Motorfahrzeugen zur Überwachung und Übertragung auf andere Einheiten und Anpassung dieser Einheiten zeigt z.B. die internationale Patentschrift WO 2007/133991 A2. Die im Motorfahrzeug dediziert installierten Detektionsvorrichtungen übermitteln bei Eintreten von Triggerevents Signaldaten auf eine Aktivierungsvorrichtung. Diese kann u.a. auch teilweise oder nicht automatisierte Versicherungssysteme umfassen.

Ebenfalls bekannt bei Betriebsstörungen ist die Interaktion dynamisch gesteuerter, benutzerspezifische Signalerzeugungsvorrichtungen mit teilweise oder nicht automatisierten Schalt- oder Aktivierungsvorrichtungen, welche mindestens ein monetär-basierten Speicher umfassen. Als Beispiel des Standes der Technik kann die internationalen Patentschriften WO 97/27561 A2/A3 (vgl. EP0877992) und WO 2007/128119 A1 oder die amerikanische Patentschrift US 2007/0225912 A1 gelten. Ein ähnliches Beispiel einer dynamischen Signalerzeugungsvorrichtung zur Interaktion mit teilweise automatisierten Betriebsinterventions- oder Schadensersatzvorrichtungen zeigt auch die kanadische Patentschrift CA 2235566 A1. Ebenso zeigt die deutsche Patentschrift DE 19901336 A1 die einer automatisierten, dynamischen Signalgenerierungsvorrichtung. Dabei wird eine zeitverbrauchsabhängige Verrechnung und Übertragung der entsprechenden Daten für Motorfahrzeuge offenbart. Auch hier bildet die Signalerzeugungsvorrichtung das automatisierte Bindeglied zwischen dem Motorfahrzeug und einer teilweise oder nicht automatisierten Schadensdeckungssystems. Ein monetär basiertes Buffersystem mit dynamisch getriggerter Aktivierungsvorrichtung wird dabei ein automatisiertes oder halbautomatisiertes Schaltsystem zu anderen Betriebsstörungsvorrichtungen. Die Patentschriften WO 2007/104982 A2/A3 oder US 2007/0225912 A1 zeigen ein anderes dynamisches System zur dynamischen Signalübertragung und Anpassung des Schalt- bzw. Versicherungssystems.

Im Stand der Technik unterscheiden sich die bekannten Alarm-, Steuer-, und Betriebsstörungsinterventionsvorrichtungen typischerweise zusätzlich je nach technischer Anwendungen durch die Art und Menge der verfügbaren Ereignisdaten Betriebsstörungen. Insbesondere unterscheidet man Anwendungen mit einer sehr kleinen Menge von verfügbaren historischen Betriebsstörungsereignisdaten zu Gebieten mit grosser Statistik betreffend den Betriebsstörungen. Dies spiegelt sich auch in den technischen Anwendungen in der Wissenschaft, die sich von Gebieten mit grosser Statistik wie z.B. Chemie mit chemischen Reaktionen oder Teilchenphysik mit Beschleunigern/Reaktoren, Detektoren und Steuervorrichtungen, zu Gebieten mit kleiner Statistik wie z.B. Weltraumforschung, Raketentechnologie oder Astronomie, unterscheiden. Betriebsstörungen bei Kraftfahrzeugen gehören zu den Anwendungen mit grosser Statistik. Beispielsweise wurden noch nicht sehr viele Mondlandungen durchgeführt, so dass die technischen Möglichkeiten für Betriebsstörungen z.B. an der Landerakete sowie den Auftretungswahrscheinlichkeiten für die jeweilige Betriebsstörung nur schwer abzuschätzen sind. Dagegen sind zu jedem beliebigen Zeitpunkt Millionen von Motorfahrzeugen auf dieser Welt in Betrieb, so dass Betriebsstörungsinterventionen genau abschätzbar und planbar sind. Während man jedoch die Laborbedingungen in den Wissenschaften technisch immer gleich zu halten versucht, um eine Wiederholbarkeit zu ermöglichen, ist dies bei Betriebsstörungen bei Kraftfahrzeugen nicht gegeben. Ein Benutzer kann z.B. in einem vergleichsweise sicheren Gebiet leben, kann sich jedoch schnell und nicht voraussagbar in risikoreichere Bereiche für Betriebsstörungen bewegen. Ein Benutzer eines Fahrzeuges kann z.B. häufiger als ein vergleichbarer anderer Benutzer in Bereiche mit hoher Unfalldichte oder Umweltgefahren fahren und damit eine größere Wahrscheinlichkeit einer Betriebsstörung oder Unfall besitzen. Trotz all dieser benutzerspezifischen Unsicherheiten kann gesagt werden, dass die Daten für Betriebsstörungen über viele Jahre hinweg relativ genau bekannt sind. Man verfügt in vielen Bereichen über eine grosse Statistik betreffend der Interventionsfälle basierend auf Betriebsstörungen. Dies unterscheidet die technischen Anwendungen der Automobilindustrie grundlegend von anderen Gebieten der Fahrzeugindustrie, wie z.B. in der Flugzeugindustrie, Raumfahrt. Nicht vorhersehbare Ausnahmen in der Statistik können sich aber auch in der Automobilindustrie ereignen z.B. verursacht durch statistisch seltene Umweltereignisse wie z.B. Betriebsstörungen verursacht durch Katastrophenereignisse wie Erdbeben, Hurrikans, Überschwemmungen etc.

### Technische Aufgabe

Es ist eine Aufgabe dieser Erfindung eine Notfallvorrichtung und Verfahren zur automatisierten Behebung von Betriebsstörungen bei Transportmittel vorzuschlagen, welche die oben erwähnten Nachteile nicht aufweisen. Insbesondere soll es möglich sein mittels angepasster Sensorik des Notfallinterventionssystems sich ereignende Betriebsstörungen automatisch zu detektieren und mittels einer Aktivierungsvorrichtung basierend für die detektierte Betriebsstörung dedizierte Aktivierungssignaldaten automatisch zu generieren und auf spezifisch selektierte Interventionsmittel zu übertragen. Mittels diesen durch das Notfallinterventionssystem spezifisch selektierten Interventionsmittel soll die Betriebsstörung effizient und ohne Interaktion durch den Benutzer behebbar sein.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zur automatisierten Behebung von Betriebsstörungen bei Transportmittel mittels einer Sensorik eines Notfallinterventionssystem sich ereignende Betriebsstörungen detektiert werden, wobei mittels einer Aktivierungsvorrichtung basierend auf einer detektierten Betriebsstörung dedizierte Aktivierungssignaldaten generiert und auf ein entsprechendes, automatisiertes Interventionsmittel übertragen werden, und wobei mittels des Interventionsmittel die Betriebsstörung behoben wird, dass ein erster inkrementierbaren Stapelspeicher eines geschützten Speichermodul einem oder mehreren Transportmittel zuordnet wird, wobei mittels eines Interfacemodul des Notfallinterventionssystem vorbestimmte Aktivierungsparameter von einer ersten Netzwerkeinheit periodisch über ein Netzwerk auf das Notfallinterventionssystem übertragen werden und der Stapelspeicher basierend auf dem übertragenen Aktivierungsparameter schrittweise inkrementiert wird, dass mittels des Interfacemodul Ergänzungsparameter von einer Vielzahl von zweiten Netzwerkeinheiten über das Netzwerk auf das Interventionssystem übertragen werden, wobei die Ergänzungsparameter mindestens Identifikationsdaten der jeweiligen zweiten Netzwerkeinheit und einen benutzerspezifischen Ergänzungsfaktor umfassen, dass die Interventionsvorrichtung ein geschütztes Ergänzungsspeichermodul mit einem zweiten inkrementierbaren Stapelspeicher und einer Lookup-Table umfasst, wobei der zweite Stapelspeicher basierend auf dem Ergänzungsfaktor inkrementiert wird und wobei Ergänzungsfaktor und Identifikationsdaten als Wertepaar mittels Lookup-Table einander zugeordnet abspeichert werden, dass ein Schaltmoduls der Notfallinterventionssystem (80) eine Stapelspeicherhöhenwertes der beiden Stapelspeicher kumuliert erfasst und, falls ein definierter kumulierter Stapelspeicherhöhenwerte erreicht wird, die Aktivierungsvorrichtung freischaltet, dass ein Korrelationsmodul der Aktivierungsvorrichtung basierend auf der Aktivierung der Interventionsmittel und/oder den dedizierten Aktivierungssignaldaten entsprechende Betriebstörungsparameter generiert und mittels der Ergänzungsfaktoren der Lookup-Table quantitativ gewichtet, wobei mittels der Betriebstörungsparameter der Stapelspeicherhöhenwert mindestens eines der beiden Stapelspeicher dekrementiert wird, dass mittels eines Clearingmoduls des Notfallinterventionssystem nach Ablauf eines vordefinierbaren Zeitfenster ein kumulierter Stapelspeicherhöhenwert der beiden Stapelspeicher zurückgesetzt wird und Clearingparameter basierend auf den Wertepaaren der Lookup-Table generiert über das Interfacemodul auf die zweiten Netzwerkeinheiten übertragen werden, falls der kumulierte Stapelspeicherhöhenwert einen vorbestimmten Schwellwert erreicht, wobei das Schaltmodul die Freischaltung der Aktivierungsvorrichtung unterbricht. Mit anderen Worten wird nach Ablauf eines vordefinierbaren Zeitfenster das Notfallinterventionssystem mittels eines Clearingmoduls zurückgesetzt und die Freischaltung mittels Schaltmodul unterbrochen. Z.B. kann das Zählermodul einen integrierten Oszillator umfassen, mittels welches Oszillators ein elektrisches Taktsignal mit einer Referenzfrequenz erzeugbar ist, wobei basierend auf dem Taktsignal der Zähler periodisch erhöhbar ist. Die Aktivierungsvorrichtung kann z.B. zum Aktivieren der Interventionsmittel ein Schaltmodul umfassen, mittels welchem die Aktivierungsvorrichtung nur freischaltbar ist, falls die Erfassung der Aktivierungsparameter periodisch detektiert wird. Die Interventionsmittel können z.B. automatisierte Notfallvorrichtungen und/oder Alarm- und Steuermodule (für z.B. automatisierte Schliess- oder Löschvorrichtungen) und/oder geldwertbasierte Übertragungsmodule umfassen. Die Erfindung hat u. a. den Vorteil, dass das automatisierte Notfallinterventionssystem eine nicht korrelierte Betriebssicherung auch für Systeme mit verhältnismässig kleinen Betriebsstörungsfluktuationen wie z.B. in der Autoindustrie möglich macht. Insbesondere werden auch vollautomatisierte Notfallinterventionsvorrichtungen z.B. basierend auf Quote-Sharing möglich wird. Dies war bis anhin mit keinem System des Standes der Technik möglich. Mittels des Systems lassen sich u. a. auch ansonsten gebundene Mittel (insbesondere auch geldbasierte Mittel, wie Finanzmittel) zur Betriebsfunktionssicherung für andere Zwecke freischalten, ohne dass die Betriebssicherheit des automatisierten Notfallinterventionssystem beeinträchtigt würde. Ein weiterer Vorteil ist, dass es mittels des Notfallinterventionssystem mit einer zusätzlichen Abdeckung möglich wird, ein frei definierbaren Sicherheitsschwellwert oder Rating zu erreichen oder ein Rating zu erhöhen, ohne dass dadurch zusätzliche Mittel in das System integriert werden müssten oder andere Mittel des Betreibers gebunden werden müssten. Da die Wahrscheinlichkeit für Betriebsstörungen in der Automobilindustrie mit einer relativ grossen Genauigkeit erfasst sind, lassen sich mit dem erfindungsgemässen Notfallinterventionssystem auch Randparameter, wie z.B. geldwertbasierte Betriebssicherungsparameter oder Unterlegungshöhenparameter zusätzlich optimieren, indem nicht nur die Wahrscheinlichkeit für Betriebsintervention mittels des automatisierten Notfallinterventionssystem nicht korreliert gesichert wird, sondern auch mittels allenfalls frei gewordenen Mittel andere Nutzungen, insbesondere Kapitalgewinnungen möglich sind. Dies ist mit keinem System des Standes der Technik so möglich. Weiter hat dies u. a. den Vorteil, dass auch automatisierte mehrstufige Notfallinterventionssysteme mit dem erfindungsgemässen System erfasst und ihre Betriebssicherheiten erhöht werden können. Ist das System in ein Quote-Sharing-Verfahren eingebunden, handelt es sich jedoch um parallele Stufen, im Gegensatz zu mehrstufigen Systemen z.B. bei Notfallinterventionssystemen bei Betriebsstörungen durch Katastrophen, wie z.B. Überschwemmungen, Hurrikans, Erdbeben und/oder Terroranschlägen. Die erwähnte Erhöhung der Betriebssicherheit solcher Systeme mit den ebenfalls erwähnten Vorteilen für den Benutzer war bis anhin so im Stand der Technik nicht möglich.

In einer Ausführungsvariante ist das automatisierte Notfallinterventionssystem zur automatisierten Notfallintervention bei Betriebsstörungen der ein oder mehreren Transportmittel mittels einer Kontroll- und/oder Alarmvorrichtung uni- oder bidirektional mit dem einen oder mehreren Transportmittel verbunden. Die Erfassungsvorrichtung kann z.B. ein Ortserfassungsmodul umfassen, mittels welchen Ortskoordinatenparameter des aktuellen Standortes des Transportmittels generiert werden und mittels der Kontroll- und/oder Alarmvorrichtung an die Kontroll- und/oder Alarmvorrichtung des einen oder mehreren Transportmittels auf das Notfallinterventionssystem übertragen werden. Diese Ausführungsvariante hat u. a. einerseits den Vorteil, dass z.B. die Aktivierungsparameter in Echtzeit (Real-Time) und/oder periodisch mittels des Notfallinterventionssystem anpassbar sind. Anderseits hat diese Ausführungsvariante auch den Vorteil, dass Betriebsinterventionen und/oder Alarmsignale und/oder Steuer-/Kontrollsignale durch das automatisierte Notfallinterventionssystem zielgerichtet und ebenfalls optimiert an das entsprechende Interventionsereignis oder Transportmittel angepasst und/oder ausgelöst werden können.

In einer Ausführungsvariante umfasst das Notfallinterventionssystem ein erstes Auslesemodul zum Generieren eines ersten Stapelspeicherhöhenwertes entsprechend der aktuellen Stapelspeicherhöhe des ersten inkrementierten Stapelspeichers, wobei basierend auf dem ersten Stapelspeicherhöhenwertes des erste inkrementierbare Stapelspeichers mittels eines ersten Addermoduls zusätzlich inkrementierbar ist. Ebenso kann die Interventionsvorrichtung z.B. ein zweites Auslesemodul zum Generieren eines zweiten Stapelspeicherhöhenwertes entsprechend der aktuellen Stapelspeicherhöhe des zweiten inkrementierten Stapelspeichers umfassen, wobei basierend auf dem zweiten Stapelspeicherhöhenwerte der zweite inkrementierbare Stapelspeicher mittels eines zweiten Addermoduls zusätzlich inkrementierbar ist. Diese Ausführungsvariante hat u. a. den Vorteil, dass die periodisch erfassten Aktivierungsparameter optimiert werden können, ohne dass es Einfluss auf die Betriebssicherheit der erfindungsgemässen Vorrichtung hätte.

In einer anderen Ausführungsvariante umfasst das erste Auslesemodul Mittel zum Real-Time-Generieren des ersten Stapelspeicherhöhenwertes. Das Notfallinterventionssystem kann z.B. auch eine Timereinheit umfassen, wobei der erste Stapelspeicherhöhenwerte innerhalb eines definierbaren Zeitfensters periodischen erzeugbar ist. Ebenso wie das erste kann auch das zweite Auslesemodul Mittel zum Real-Time-Generieren des zweiten Stapelspeicherhöhenwertes umfassen. Die Notfallinterventionsvorrichtung kann z.B. auch eine Timereinheit umfassen, wobei der zweite Stapelspeicherhöhenwert innerhalb eines definierbaren Zeitfensters periodischen erzeugbar ist. Diese Ausführungsvariante hat u. a. den Vorteil, dass die Aktivierungsparameter in Real-Time, dynamisch angepasst werden können, ohne dass es Einfluss auf die Betriebssicherheit der erfindungsgemässen Vorrichtung und System hätte.

In einer weiteren Ausführungsvariante kann das Notfallinterventionssystem ein Netzwerkinterface umfassen, wobei mittels des Netzwerkinterface auf mindestens eine dezentralisierte Datenbank mit zugeordneten Börsen- und/oder Finanzinstitutparametern zugegriffen wird. Diese Ausführungsvariante hat u. a. den Vorteil, dass im Falle einer technischen Realisierung der Notfallinterventionsvorrichtung in Verbindung mit geldwertbasierten Systemen eine vollständig automatisierte Betriebssicherung der Transportmittel durchgeführt werden kann. Ebenso können mittels des Notfallinterventionssytems in diesem Fall Schwankungen von Börsentracks oder entsprechenden Finanzparametern vollautomatisch abgefangen werden, ohne dass die Betriebssicherheit des erfinderischen Systems beeinträchtigt würde.

In einer wieder anderen Ausführungsvariante umfasst das Ergänzungsspeichermodul einen vom inkrementierbaren Stapelspeicher getrennten Speicherbereich, wobei mittels der Lookup-Table geschützte Teile des Stapelspeicher dem getrennten Stapelspeicher zugeordnet wird. Diese Ausführungsvariante hat u. a. den Vorteil, dass die Zuordnung der Clearingparameter mittels der Lookup-Table zu den jeweiligen Identifikationsdaten nicht ausschliesslich basierend auf dem ersten und/oder zweiten Stapelspeichers durchgeführt wird, sondern dem Benutzer durch das Notfallinterventionssystem eine minimale Zuordnung garantiert wird.

In einer anderen Ausführungsvariante umfasst das Notfallinterventionssystem zusätzlich zur Ergänzungsspeichermodul mindestens ein Submodul, welches unterschiedlichen Interventionsklassen und/oder Wahrscheinlichkeitsgruppen umfasst, wobei bei Erreichen bestimmbarer Schwellwerte von Zählern mittels der Lookup-Table den jeweiligen Identifikationsdaten Clearingparameter basierend auf dem ersten und zweiten Stapelspeicher zugeordnet werden und mittels Interventionsvorrichtung über eine Interfacemodul auf mindestens eine Netzwerkeinheit übertragen werden. Die Submodule können z.B. vom Ergänzungsspeichermodul veränderbar, insbesondere als Ausführungsform gemäß einem Benutzerprofil dynamisch veränderbar, zugeordnet sein. Diese Ausführungsvariante hat u. a. den Vorteil, dass eine abgestufte Übermittlung der Clearingparameter z.B. zur Gutschrift von Geldbetragswerten basierend auf der zweiten Speichereinheit zugeordnet und z.B. an ein Clearingmodul übermittelt werden kann, falls die zweite Speichereinheit nach Ablauf des Zeitintervalls Clearingparameter umfasst.

An dieser Stelle soll festgehalten werden, dass sich die vorliegende Erfindung neben dem erfindungsgemässen Verfahren auch auf ein System zur Ausführung dieses Verfahrens und ein entsprechendes Computerprogrammprodukt bezieht.

Nachfolgend werden Ausführungsvarianten der vorliegenden Erfindung anhand von Beispielen beschrieben. Die Beispiele der Ausführungen werden durch folgende beigelegte Figuren illustriert:

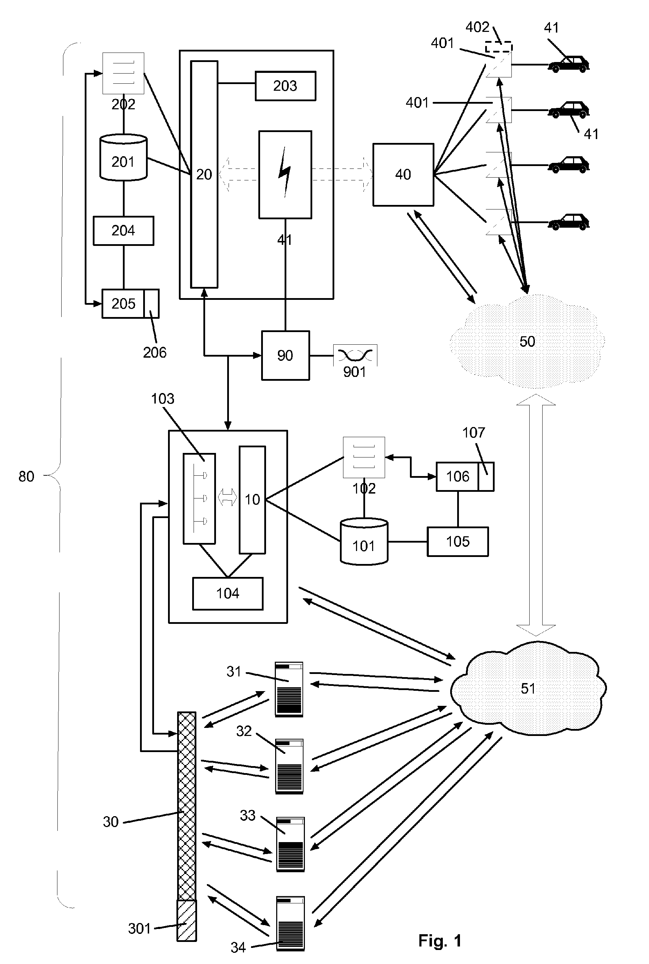

Figur 1 zeigt ein Blockdiagramm, welches schematisch ein Ausführungsbeispiel eines erfindungsgemässen Notfallinterventionssystem 80 zur automatisierten Behebung von Betriebsstörungen bei Transportmittel 41 zeigt. Mittels einer Sensorik 401 des Notfallinterventionssystem 80 wird eine sich ereignende Betriebsstörung detektiert und mittels einer Aktivierungsvorrichtung 203 werden für die detektierte Betriebsstörung dedizierte Aktivierungssignaldaten generiert und auf ein entsprechendes, automatisiertes Interventionsmittel 40 übertragen. Mittels der Interventionsmittel 40 wird die Betriebsstörung, ohne dass Interaktion des Benutzers notwenig ist, behoben.

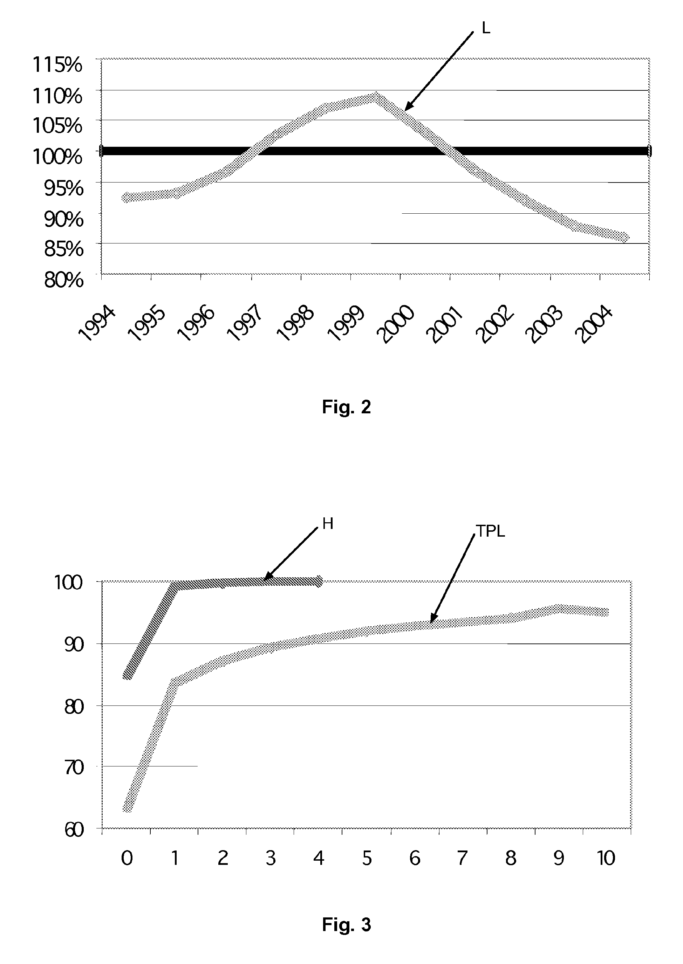

Figur 2 betrifft die TPL bei der technischen Umsetzung eines geldwertbasierten Ausführungsbeispieles der Interventionsvorrichtung 80. Die Figur zeigt das Interventionsverhältnis zur Stapelspeicherhöhendetektion bei Interventionsereignissen gegenüber Dritten (Third Party Liabilities: TPL). Im Jahr 2004 lag sie bei einer möglichen Ausführungsform der Erfindung z.B. bei 86%.
Figur 3 zeigt ebenfalls die TPL bei der technischen Umsetzung eines geldwertbasierten Ausführungsbeispieles der Interventionsvorrichtung 80 mit der Linie H das Interventionsmass beim Betriebsstörungen bei Fahrzeug und mit der Linie TPL die Intervention bei Dritten in Abhängigkeit der Jahre für ein Ausführungsbeispiel 80 für Transportmittelvorrichtungen 41.

Figur 1 illustriert eine Architektur, die zur Realisierung der Erfindung verwendet werden kann. In diesem Ausführungsbeispiel werden zur automatisierten Behebung der Betriebsstörungen bei Transportmittel 41 mittels einer entsprechend selektierten oder angepassten Sensorik 401 eines Notfallinterventionssystem 80 bzw. einer Betriebsstörungsbehebungsvorrichtung 80 sich ereignende Betriebsstörungen detektiert. Unter Transportmittel 41 sind jede Art von Kraftfahrzeugen, wie Personenwagen, Lastwagen, Schienentransportmittel und Züge, zwei und dreirädrige Fahrzeuge wie Motorräder, Fahrräder, Flugzeuge, oder andere Personen- oder Gütertransportmittel zu verstehen. Das automatisierte Notfallinterventionssystem 80 kann z.B. automatisch ausgelöste Löschsysteme, Stromunterbruchs- oder Notgeneratorsysteme, Betriebskontrollsysteme mit automatisierten Steuer- und/oder Alarmvorrichtungen, Signalumwandlungs- oder Relaissysteme zur automatisierten Alarm- oder Kontrollsteuerauslösung etc. umfassen. Das Notfallinterventionssystem 80 kann zur automatisierten Notfallintervention bei Betriebsstörungen mittels einer Kontroll- und/oder Alarmvorrichtung 402 uni- oder bidirektional mit den Transportmittel 41 verbunden sein. Die Verbindung kann über eine luft- und/oder landgestützte Verbindung, insbesondere festverbunden und/oder drahtlos, erfolgen. Die Sensorik kann z.B. Sensoren zur Geschwindigkeits-, Motorenwärme- und/oder Treibstoffmessung oder anderen Bentriebsparametern des Transportmittels 41 umfassen. Die Sensorik 401 kann z.B. auch ein Ortserfassungsmodul umfassen, mittels welchem Ortserfassungsmoduls Ortskoordinatenparameter des aktuellen Standortes des Transportmittels 41 generiert werden und mittels der Kontroll- und/oder Alarmvorrichtung 402 des einen oder mehreren Transportmittels 41 auf die Notfallinterventionssystem 80 übermittelt werden. Insbesondere kann die Sensorik 401 auch Mittel zum Erfassen von benutzerspezifischen Messparameters des Fahrzeugbenutzers (z.B. Blutdruck, Alkohol, Eyetracking, Hautoberflächenspannung, Blutzucker, Herzschlag etc.) umfassen. Mittels einer Aktivierungsvorrichtung 203 werden basierend auf der detektierten Betriebsstörung dedizierte Aktivierungssignaldaten generiert und auf ein entsprechendes, automatisiertes Interventionsmittel 40 übertragen. Die Aktivierungsvorrichtung 203 kann uni- oder bidirektional mit den automatisierten Interventionsmittel 40 verbunden sein. Dies erlaubt eine voll automatisierte Kontrolle, Steuerung bzw. Intervention. Mittels des Interventionsmittel 40 wird die Betriebsstörung behoben, so dass das Transportmittel 41 für den Benutzer wieder den vollen Betrieb ausführen kann. Die automatisierten Interventionsmittel 40 können z.B. automatisch ausgelöste Löschsysteme, Stromunterbruchs- oder Notgeneratorsysteme, Betriebskontrollsysteme mit automatisierten Steuer- und/oder Alarmvorrichtungen (insbesondere zur Alarmauslösung für Polizei- , Militär-, Katastrophen- oder Krankenretteinsätzen), Signalumwandlungs- oder Relaissysteme zur automatisierten Alarm- oder Kontrollsteuerauslösung, Steuer- und Regelungssysteme für Kanalisationen oder anderen Röhrensystemen etc. umfassen. Ein erster inkrementierbaren Stapelspeicher 202 eines geschützten Speichermodul 201 der Betriebsstörungsbehebungsvorrichtung 80 wird einem oder mehreren Transportmittel 41 zuordnet wird. Mittels eines Interfacemodul der Betriebsstörungsbehebungsvorrichtung 80 bzw. des Notfallinterventionssystem 80 werden vorbestimmte Aktivierungsparameter von einer ersten Netzwerkeinheit periodisch und/oder auf Request über ein Netzwerk 50 auf das Notfallinterventionssystem 80 übertragen. Das Kommunikationsnetz 50 umfasst beispielsweise ein GSM- oder ein UMTS-Netz, oder ein satellitenbasiertes Mobilfunknetz und/oder ein oder mehrere Festnetze, beispielsweise das öffentlich geschaltete Telefonnetz, das weltweite Internet oder ein geeignetes LAN (Local Area Network) oder WAN (Wide Area Network). Insbesondere umfasst es auch ISDN- und XDSL-Verbindungen. Der erste Stapelspeicher 202 wird basierend auf dem übertragenen Aktivierungsparameter schrittweise inkrementiert. Mittels eines Netzwerkinterface 301 kann das Notfallinterventionssystem 80 z.B. auf mindestens eine dezentralisierte Datenbank mit zugeordneten Börsen- oder Finanzinstitutparametern zugreift. Aktivierungsparameter können damit z.B. insbesondere auf den übertragenen Börsen- oder Finanzinstitutparametern basieren. Beispielsweise kann mittels eines ersten Auslesemoduls 205 ein erster Stapelspeicherhöhenwert des ersten Stapelspeichers 202 in Real-Time generierbar sein. Das Notfallinterventionssystem 80 kann z.B. auch mittels einer Timereinheit 206 den ersten Stapelspeicherhöhenwert innerhalb eines definierbaren Zeitfensters periodisch erzeugen. Mittels eines integrierten Oszillators des Schaltmoduls 104 kann z.B. ein elektrisches Taktsignal mit einer Referenzfrequenz erzeugt werden, wobei basierend auf dem Taktsignal der Zähler periodisch erhöht wird.

Mittels des Interfacemodul werden Ergänzungsparameter von einer Vielzahl von zweiten Netzwerkeinheiten 31,...,34 über das Netzwerk 50 auf das Interventionssystem 80 übertragen. Die Ergänzungsparameter umfassen mindestens Identifikationsdaten der jeweiligen zweiten Netzwerkeinheit 31,...,34 und einen benutzerspezifischen Ergänzungsfaktor. Die Interventionsvorrichtung 80 umfasst ein geschütztes Ergänzungsspeichermodul 101 mit einem zweiten inkrementierbaren Stapelspeicher 102 und einer Lookup-Table 103. Der zweite Stapelspeicher 102 wird basierend auf dem Ergänzungsfaktor inkrementiert wird, wobei Ergänzungsfaktor und Identifikationsdaten als Wertepaar mittels Lookup-Table 103 einander zugeordnet abspeichert werden, Ein Schaltmoduls 104 des Notfallinterventionssystem 80 erfasst kumuliert einen Stapelspeicherhöhenwert der beiden Stapelspeicher 102/202. Falls ein vordefinierter kumulierter Speicherschwellwert erreicht wird, wird die Aktivierungsvorrichtung 203 freigeschaltet. Mittels eines Steuermoduls kann z.B. die Aktivierungsvorrichtung 203 zum Aktivieren der Interventionsmittel 40 nur dann freischaltbar sein, falls die Erfassung der Aktivierungsparameter periodisch und/oder in Übereinstimmung mit definierbaren Kontrollparametern detektiert wird. Mittels der Interventionsmittel 40 können z.B. automatisierte Notfallvorrichtungen und/oder geldwertbasierte Übertragungsmodule basierend auf den detektierten Interventionsereignissen aktiviert werden. In einer Ausführungsvariante kann das Notfallinterventionssystem 80 z.B. mittels eines zweiten Auslesemoduls 105 einen zweiten Stapelspeicherhöhenwert entsprechend der aktuellen Stapelspeicherhöhe des zweiten inkrementierbaren Stapelspeichers 102 generieren, wobei basierend auf dem zweiten Stapelspeicherhöhenwert mittels eines zweiten Addermoduls 106 der zweite inkrementierbare Stapelspeicher 102 zusätzlich inkrementiert wird. Z.B. kann auch mittels des zweiten Auslesemoduls 105 der zweite Stapelspeicherhöhenwert in Real-Time generiert werden. Ebenso kann das Notfallinterventionssystem 80 mittels einer Timereinheit 107 den zweiten Stapelspeicherhöhenwert innerhalb eines definierbaren Zeitfensters periodisch erzeugen. Mittels eines vom inkrementierbaren Stapelspeicher 102 des Ergänzungsspeichermoduls 101 getrennten Speicherbereichs können z.B. basierend auf der Lookup-Table 103 geschützte Teile des Stapelspeicher 102 dem getrennten Speicherbereich zugeordnet werden.

Ein Korrelationsmodul 90 der Aktivierungsvorrichtung 203 generiert basierend auf der Aktivierung der Interventionsmittel 40 und/oder den dedizierten Aktivierungssignaldaten entsprechende Betriebstörungsparameter, welche mittels der Ergänzungsfaktoren der Lookup-Table quantitativ gewichtet werden 901. Basierend auf den Betriebstörungsparameter wird der Stapelspeicherhöhenwert mindestens eines der beiden Stapelspeicher 102/202 dekrementiert. Mittels eines Clearingmoduls des Notfallinterventionssystem 80 wird nach Ablauf eines vordefinierbaren Zeitfenster ein kumulierter Stapelspeicherhöhenwert der beiden Stapelspeicher 102/202 ausgelesen und es werden Clearingparameter basierend auf den Wertepaaren der Lookup-Table 103 generiert und über das Interfacemodul 30 auf die zweiten Netzwerkeinheiten 31,...,34 übertragen, falls der kumulierte Stapelspeicherhöhenwert einen vorbestimmten Schwellwert erreicht. Dabei unterbricht das Schaltmodul 104 die Freischaltung der Aktivierungsvorrichtung. Z.B. kann mittels des Interfacemodul 30 die Aktivierungsparameter geschützt bi- oder unidirektional übertragen werden, wobei die Clearingparameter spezifischen Identifikationsdaten mittels der Lookup-Table 103 zugeordnet sind. In einer Ausführungsvariante kann z.B. das Notfallinterventionssystem 80 mittels eines Netzwerkinterfaces 301 auf mindestens eine dezentralisierte Datenbank mit zugeordneten Börsenparametern zugreifen.

Wie bereits erwähnt, können zu den automatisierten Notfallinterventionssystemen 80 oder Betriebsstörungsbehebungsvorrichtungen z.B. automatisch ausgelöste Löschsysteme, Stromunterbruchs- oder Notgeneratorsysteme, Betriebskontrollsysteme mit automatisierten Steuer- und/oder Alarmvorrichtungen, Signalumwandlungs- oder Relaissysteme zur automatisierten Alarm- oder Kontrollsteuerauslösung etc. Die Betriebsstörungsbehebungsvorrichtung 80 kann z.B. mit einer oder mehreren weiteren Betriebsstörungsbehebungsvorrichtung 80 basierend auf einem Quote-Sharingparameter für die Betriebsstörungswahrscheinlichkeit bzw. Interventionsrisiken oder Betriebsunterbruchsrisiken synchronisiert verbunden sein. Da verhältnismäßig kleine Fluktuationen der in fixen Zeitintervallen detektierten Betriebsunterbrüche und/oder -störungen normal sind, können zweite Stufen der Betriebsstörungsbehebungsvorrichtung 80 (insbesondere in Zusammenhang mit z.B. automatisierten Rückversicherungssystemen) die Anzahl der Störungsbehebungen entsprechend einer fixierten und vorgängig zwischen den Systemen synchronisierten Quotenparameter durchgeführt werden. Die Betriebsstörungsbehebungsvorrichtung 80 kann weiter ein Vorhersagemodul oder Extrapolationsmodul umfassen. Mittels des Extrapolationsmoduls können z.B. die Betriebsunterbruchswahrscheinlichkeiten für zukünftige Zeitintervalle generiert werden. Das Extrapolationsmodul kann zusätzlich auch die Generierung und Übertragung von Unterlegungshöhenparameter und/oder Vergütungsparameter kumulierbarer Betriebstörungsparameter umfassen. Das Extrapolationsmodul kann wie die anderen erfindungsgemäßen Einheiten hardware- und/oder softwaremäßig realisiert sein. Bei der technischen Umsetzung des Extrapolationsmodul können die Interventionswahrscheinlichkeiten oder solche Unterlegungshöhenparameter mit Geldbetragswerten kumulierbarer Betriebsstörungsrisiken mittels eines bestimmbaren Benutzerfaktors unterteilt werden. Diese Interventionswahrscheinlichkeiten oder Unterlegungshöhenparameter sind entsprechend dem bestimmbaren Zentraleinheitsfaktor den kumulierbaren Betriebsstörungsrisiken zugeordnet abgespeichert. Von der Betriebsstörungsbehebungsvorrichtung 80 können die Aktivierungsparameter für die kumulierten Betriebsinterventionen bzw. des entsprechenden Stapelspeicherhöhenwertes auf das Speichermodul 201 übertragen werden. Von den Netzwerkeinheiten 31 bis 34 können in dieser Ausführungsvariante z.B. Geldbetragswerte basierend auf dem bestimmbaren Benutzerfaktor auf das Ergänzungsspeichermodul 101 übertragen werden und den kumulierbaren Betriebsstörungswahrscheinlichkeiten und/oder Stapelspeicherhöhenwerten zugeordnet abgespeichert werden. Die Netzwerkeinheiten 31 bis 34 können z.B. technisch individualisierbare Benutzermodule ganz allgemeiner Art umfassen. Zur Realisierung des ersten und/oder zweiten Addermoduls 106/205 können als zusätzliche Ausführungsvariante die Stapelspeicherhöhen mittels der Auslesemodule 105/204 (wobei die Stapelspeicherhöhewerte einem Geldbetragswerte zugeordnet werden) des Speichermoduls 201 und/oder des Ergänzungsspeichermoduls 101 während der verfügbaren Zeit z.B. auf ein Geldinstitut übertragen werden. Die Kontrolle und/oder Steuerung kann z.B. automatisiert mittels der Timereinheiten 107/206 geschehen. Das Geldinstitut kann als Ausführungsbeispiel z.B. die Interaktion mit einer Bank und/oder Börsenplatz und/oder einen Anleger umfassen. Nach dem bestimmbaren Zeitintervall werden dann Vergütungsparameter, wie z.B. Zinsen und/oder andere Renditen der übertragenen Geldbetragswerte, entsprechend den übermittelten Geldbetragswerten als ergänzende Aktivierungsparameter vom Geldinstitut an die Speichermodule 101/201 übertragen und von der Betriebsstörungsbehebungsvorrichtung 80 automatisiert zu den bereits abgespeicherten Parameter aufsummiert und gespeichert, d.h. der erste und/oder zweite Stapelspeicher 102/202 entsprechend inkrementiert. Die Betriebsstörungsbehebungsvorrichtung 80 kann z.B. bei im Zeitintervall angefallenen Interventionsereignissen erste Verrechnungsdaten mit Verrechnungsparametern zur Gutschrift von Geldbetragswerten einem Transportmittels 41 zugeordnet an ein Clearingmodul übermitteln. Die übermittelten Aktivierungsparameter bzw. Geldbetragswerte werden vom Speichermodul 201 bzw. den abgespeicherten Inkrementierungsparametern des Speichermoduls 201 dekrementiert und falls das Speichermodul 201 keinen entsprechenden Stapelspeicherhöhenwert des ersten inkrementierbaren Stapelspeichers 202 umfasst vom Ergänzungsspeichermoduls 101 dekrementiert. Zweite Verrechnungsdaten mit Verrechnungsparameter zur Gutschrift von Geldbetragswerten können z.B. basierend auf einem bestimmbaren Risikovergütungsfaktor einer Netzwerkeinheit 31 bis 34 zugeordnet an ein Clearingmodul übermittelt werden. Falls das Ergänzungsspeichermodul 102 nach Ablauf des Zeitintervalls z.B. basierend auf der Timereinheit 206 ein positives Stapelspeicherhöhensignal mittels des Auslesemoduls 204 (hier z.B. positive Geldbetragswerte) umfasst, werden dritte Aktivierungsparameter mit Verrechnungsparameter zur Gutschrift von Geldbetragswerten basierend auf den Geldbetragswerten des Ergänzungsspeichermoduls 101 und dem Risikovergütungsfaktor der Netzwerkeinheit 31 bis 34 zugeordnet an ein Clearingmodul übermittelt. Vergütungsparameter und/oder Unterlegungshöhen und/oder Betriebsstörungsereignisse können z.B. als entsprechende Verrechnungsdaten und/oder -Parameter sowohl vom Notfallinterventionssystem 80 oder einzelnen Vorrichtungskomponenten, aber auch z.B. von einer Signalvorrichtung des Geldinstitut oder gar von Mitteln eines Benutzers generiert sein. Die Verrechnungsdaten und/oder Vergütungsparameter können z.B. Verrechnungsbelege (z.B. elektronisch signiert) umfassen, ähnlich wie CDR-Belege (Call Data Records) bei so genannten DUR-Belegen (DAB/DVB Usage Records). Die Verrechnungsbelege werden z.B. an ein Clearingmodul übermittelt. Das Clearingmodul kann auch dezentral Dritten wie einer Kreditkartengesellschaft zugeordnet sein. Mittels des Clearingmoduls werden die Verrechnungsdaten weiter bearbeitet, oder die genannten Systeme (Notfallinterventionsvorrichtung 80, Benutzer Mittel etc.) führen die Verrechnung eigenständig durch. Mittels eines Repackagingmoduls können z.B. leistungsorientierte und/oder Clearingmodulspezifische Aktivierungsparameter oder Verrechnungsdaten optimiert auch mit einem elektronischen Stempel, einer elektronischen Signatur, oder einem elektronischen Wasserzeichen versehen werden. Die elektronische Signatur erlaubt es, die Verrechnungsdaten zu einem beliebigen späteren Zeitpunkt dem entsprechenden System und/oder Vorrichtung zuzuordnen. In einer speziellen Ausführungsvariante kann es sinnvoll sein, dass die Netzwerkeinheiten 31 bis 34 Submodule mit unterschiedlichen Wahrscheinlichkeitsklassen und/oder Risikoklassen für Betriebsstörungsereignisse der Transportmittel 41, z.B. auch mit unterschiedlichen Risikovergütungsfaktoren und/oder z.B. unterschiedlichen Übermittlungskonditionsparameter zur Übermittlung von Geldbetragswerten vom Speichermodul 201 zugeordnet werden.

Um eine zusätzliche Automatisierung bei der technischen Umsetzung zu erreichen, was insbesondere auch eine dynamische Anpassung der erfindungsgemäßen Notfallinterventionssystem 80 möglich macht, kann das Speichermodul 201 und/oder das Ergänzungsspeichermodul 101 z.B. ein Kontrollmodul umfassen. Das Kontrollmodul wirkt als Triggervorrichtung und kann hardware- und/oder softwaremäßig realisiert sein. Mittels des Kontrollmoduls können zusätzlich z.B. ein Risikovergütungsfaktor mit Vergütungsparameter basierend auf den kumulierten Inkrementierungsparametern oder Aktivierungsparametern des Speichermoduls 101 verglichen und falls der Risikovergütungsfaktor in einem definierbaren Schwellwert kleiner als die Vergütungsparameter detektiert wird, Interventionsmittel in einer zweiten Stufe aktiviert werden. Um eine Feedback- und/oder Kontrollmöglichkeit für einen Benutzer zu schaffen, kann z.B. mittels des Gewichtungsmodules 901 mindestens ein variablen Gewichtungsparameters basierend auf den detektierten ersten und/oder zweiten Stapelspeicherhöhensignalen und der maximal möglichen Interventionsstörungen bestimmt werden. Der Gewichtungsparameter kann einem der im Stand der Technik allgemein bekannten Ratingverfahren zur Einschätzung von Personen, Gegenständen oder Unternehmen angepasst werden und/oder auf ein solches Verfahren normiert werden. Für einen Benutzer kann es z.B. wichtig sein, ein bekanntes Ratingverfahren zur Normierung zu verwenden. Zur Einschätzung der Zahlungsfähigkeit eines Schuldners werden dabei Ratingcodes verwendet. Die Einordnung kann mit eigenen Kriterien der Bank, oder von international tätigen Ratingagenturen, wie Moody's, Standard & Poor's, oder Fitch bestimmt werden. Z.B. kann dabei das bekannte AAA für eine hohe Bonität stehen und C oder gar D für eine sehr schlechte. Die einzelnen Kategoriebezeichnungen können sich von Agentur zu Agentur unterscheiden. So verwendet z.B. Moody's Zahlen als Zusatz, z.B. A1, A2, A3; während bei Standard & Poor's das "+" und "-" Zeichen angehangen werden, z.B. B+, B, B-. Die Interventionsvorrichtung kann z.B. dynamisch gemäß einem Benutzerprofil für einen Benutzer eine benutzerspezifische Normierung durchführen. Ratings kann es sowohl für Unternehmen wie für Staaten geben. So hat z.B. Österreich ein AAA-Rating. Üblicherweise kann ein Unternehmen übrigens nie ein besseres Rating erreichen als der Staat, in welchem es ansässig ist. Im Stand der Technik gilt in der Regel, dass ein Schuldner mit besserem Rating sich zu besseren Konditionen Kapital verschaffen kann. Andersherum gilt, dass man von Schuldnern mit schlechtem Rating eine höhere Rendite erwirtschaften kann, wobei die Wahrscheinlichkeit für einen Zahlungsausfall (Bonitätsrisiko) allerdings viel höher ist. Es ist deshalb wichtig zu erwähnen, dass ein Down-Grading bezüglich des Ratings häufig einen katastrophalen Effekt auf Unternehmen wie auch Staaten, die für ihre Kapitalbedürfnisse plötzlich mehr Rendite bieten müssen, hat. Um das Rating gab es übrigens deshalb auch häufig heftige Auseinandersetzungen zwischen der Rating-Agentur und dem beurteilten Systemen und/oder Unternehmen. Für eine gute Abschätzung bzw. ein gutes Rating durch den Benutzer können z.B. die Stapelspeicherhöhenwerte des geschützten Speichermoduls 201 und des Ergänzungsspeichermoduls 101 sowie den Inkrementierungsparametern und/oder Aktivierungsparametern des ersten inkrementierbaren Stapelspeichers 202 relevant sein. Um möglichst attraktiv zu sein für allfällige Benutzer der Netzwerkeinheiten 31 bis 34, kann z.B. die Stapelspeicherhöhe bzw. der Aktivierungsparameter des Speichermoduls 101 angepasst werden. Dies kann auch dynamisch erfolgen. Gleichzeitig können damit zusätzlich z.B. auch die eigenen übertragenen Aktivierungsparameter (z.B. als Unterlegungshöhe gebundenen Mittel) mittels dem Notfallinterventionssystem 80, bzw. mit einer Anpassung der Stapelspeicherhöhe bzw. der Aktivierungsparameter des Speichermoduls 101 reduziert und für andere Funktionen freigemacht werden. Auch dies war im Stand der Technik bis anhin so nicht möglich. Dazu gehört, dass Interventionsmittel 40, die dem Notfallinterventionssystem 80 neu zur Verfügung stehen, wie erwähnt automatisiert mit Vergütungsparameter z.B. von Kapitalmärkten verglichen werden und entsprechend angepasst werden können.

Mittels eines Interface des Gewichtungsmodules kann über ein Netzwerk 50/51 beispielsweise die mindestens einen variablen Gewichtungsparameter an mobile und/oder stationäre Netzwerkeinheiten oder -Nodes 31 bis 34 vom Benutzer übermittelt werden. Damit hat der Benutzer eine dynamische Kontrolle über die ihm zugeordneten Netzwerkeinheiten 31 bis 34. Es ist sogar vorstellbar, dass er basierend auf den Gewichtungsparameter seine Zuordnung zu einem oder mehreren Submodulen 31/32/33/34 dynamisch anpassen kann. Die Kommunikationsnetze 50/51 umfassen beispielsweise ein GSM- oder ein UMTS-Netz, oder ein satellitenbasiertes Mobilfunknetz und/oder ein oder mehrere Festnetze, beispielsweise das öffentlich geschaltete Telefonnetz, das weltweite Internet oder ein geeignetes LAN (Local Area Network) oder WAN (Wide Area Network). Insbesondere umfasst es auch ISDN- und XDSL-Verbindungen.

## Patentansprüche

1. Verfahren zur automatisierten Behebung von Betriebsstörungen bei Transportmittel (41), wobei mittels einer Sensorik (401) eines Notfallinterventionssystem (80) sich ereignende Betriebsstörungen detektiert werden, wobei mittels einer Aktivierungsvorrichtung (203) basierend auf einer detektierten Betriebsstörung dedizierte Aktivierungssignaldaten generiert und auf ein entsprechendes, automatisiertes Interventionsmittel (40) übertragen werden, und wobei mittels des Interventionsmittel (40) die Betriebsstörung behoben wird, **dadurch gekennzeichnet,**
**dass** ein erster inkrementierbaren Stapelspeicher (202) eines geschützten Speichermodul (201) einem oder mehreren Transportmittel (41) zuordnet wird, wobei mittels eines Interfacemodul des Notfallinterventionssystem (80) vorbestimmte Aktivierungsparameter von einer ersten Netzwerkeinheit periodisch über ein Netzwerk (50) auf das Notfallinterventionssystem (80) übertragen werden und der Stapelspeicher (202) basierend auf dem übertragenen Aktivierungsparameter schrittweise inkrementiert wird,
**dass** mittels des Interfacemodul Ergänzungsparameter von einer Vielzahl von zweiten Netzwerkeinheiten (31,...,34) über das Netzwerk (50) auf das Interventionssystem (80) übertragen werden, wobei die Ergänzungsparameter mindestens Identifikationsdaten der jeweiligen zweiten Netzwerkeinheit (31,...,34) und einen benutzerspezifischen Ergänzungsfaktor umfassen,
**dass** die Interventionsvorrichtung (80) ein geschütztes Ergänzungsspeichermodul (101) mit einem zweiten inkrementierbaren Stapelspeicher (102) und einer Lookup-Table (103) umfasst, wobei der zweite Stapelspeicher (102) basierend auf dem Ergänzungsfaktor inkrementiert wird und wobei Ergänzungsfaktor und Identifikationsdaten als Wertepaar mittels Lookup-Table (103) einander zugeordnet abspeichert werden,
**dass** ein Schaltmoduls (104) des Notfallinterventionssystems (80) einen Stapelspeicherhöhenwert der beiden Stapelspeicher (102/202) kumuliert erfasst und, falls ein definierter kumulierter Speicherschwellwert erreicht wird, die Aktivierungsvorrichtung (203) freischaltet,
**dass** ein Korrelationsmodul (90) der Aktivierungsvorrichtung (203) basierend auf der Aktivierung der Interventionsmittel (40) und/oder den dedizierten Aktivierungssignaldaten entsprechende Betriebstörungsparameter generiert und mittels der Ergänzungsfaktoren der Lookup-Table quantitativ gewichtet (901), wobei mittels der Betriebstörungsparameter der Stapelspeicherhöhenwert mindestens eines der beiden Stapelspeicher (102/202) dekrementiert wird,
**dass** mittels eines Clearingmoduls des Notfallinterventionssystem (80) nach Ablauf eines vordefinierbaren Zeitfenster ein kumulierter Stapelspeicherhöhenwert der beiden Stapelspeicher (102/202) ausgelesen wird und Clearingparameter basierend auf den Wertepaaren der Lookup-Table (103) generiert und über das Interfacemodul (30) auf die zweiten Netzwerkeinheiten (31,...,34) übertragen werden, falls der kumulierte Stapelspeicherhöhenwert einen vorbestimmten Schwellwert erreicht, wobei das Schaltmodul (104) die Freischaltung der Aktivierungsvorrichtung unterbricht.

2. Verfahren nach Anspruch 1, **dadurch gekennzeichnet, dass** das Notfallinterventionssystem (80) zur automatisierten Notfallintervention bei Betriebsstörungen der ein oder mehreren Transportmittel (41) mittels einer Kontroll- und/oder Alarmvorrichtung (402) uni- oder bidirektional mit dem einen oder mehreren Transportmittel (41) verbunden wird.

3. Verfahren nach Anspruch 2, **dadurch gekennzeichnet, dass** mittels eines Ortserfassungsmoduls der Sensorik (401) Ortskoordinatenparameter des aktuellen Standortes des Transportmittels (41) generiert werden und mittels der Kontroll- und/oder Alarmvorrichtung (402) des einen oder mehreren Transportmittels (41) auf die Notfallinterventionssystem (80) übermittelt werden.

4. Verfahren nach einem der Ansprüche 1 bis 3, **dadurch gekennzeichnet, dass** mittels eines ersten Auslesemoduls (205) ein erster Stapelspeicherhöhenwert des ersten Stapelspeichers (202) in Real-Time generiert wird.

5. Verfahren nach einem der Ansprüche 1 bis 4, **dadurch gekennzeichnet, dass** das Notfallinterventionssystem (80) mittels einer Timereinheit (206) den ersten Stapelspeicherhöhenwert innerhalb eines definierbaren Zeitfensters periodisch erzeugt.

6. Verfahren nach einem der Ansprüche 1 bis 5, **dadurch gekennzeichnet, dass** mittels des Interfacemodul (30) die Aktivierungsparameter geschützt bi- oder unidirektional übertragen werden, wobei die Clearingparameter spezifischen Identifikationsdaten mittels der Lookup-Table (103) zugeordnet sind.

7. Verfahren nach einem der Ansprüche 1 bis 6, **dadurch gekennzeichnet, dass** das Notfallinterventionssystem (80) mittels eines zweiten Auslesemoduls (105) einen zweiten Stapelspeicherhöhenwert entsprechend der aktuellen Stapelspeicherhöhe des zweiten inkrementierbaren Stapelspeichers (102) generiert, wobei basierend auf dem zweiten Stapelspeicherhöhenwert mittels eines zweiten Addermoduls (106) der zweite inkrementierbare Stapelspeicher (102) zusätzlich inkrementiert wird.

8. Verfahren nach Anspruch 7, **dadurch gekennzeichnet, dass** mittels des zweiten Auslesemoduls (105) der zweite Stapelspeicherhöhenwert in Real-Time generiert wird.

9. Verfahren nach einem der Ansprüche 7 oder 8, **dadurch gekennzeichnet, dass** das Notfallinterventionssystem (80) mittels einer Timereinheit (107) den zweiten Stapelspeicherhöhenwert innerhalb eines definierbaren Zeitfensters periodisch erzeugt.

10. Verfahren nach einem der Ansprüche 1 bis 9, **dadurch gekennzeichnet, dass** das Notfallinterventionssystem (80) mittels eines Netzwerkinterfaces (301) auf mindestens eine dezentralisierte Datenbank mit zugeordneten Börsenparametern zugreift.

11. Verfahren nach einem der Ansprüche 1 bis 10, **dadurch gekennzeichnet, dass** mittels eines vom inkrementierbaren Stapelspeicher (102) des Ergänzungsspeichermoduls (101) getrennten Speicherbereichs basierend auf der
Lookup-Table (103) geschützte Teile des Stapelspeicher (102) dem getrennten Speicherbereich zugeordnet werden.

12. Verfahren nach einem der Ansprüche 1 bis 11, **dadurch gekennzeichnet, dass** mittels eines integrierten Oszillators des Schaltmoduls (104) ein elektrisches Taktsignal mit einer Referenzfrequenz erzeugt wird, wobei basierend auf dem Taktsignal der Zähler periodisch erhöht wird.

13. Verfahren nach einem der Ansprüche 1 bis 12, **dadurch gekennzeichnet, dass** mittels eines Steuermoduls die Aktivierungsvorrichtung (203) zum Aktivieren der Interventionsmittel (40) nur freigeschaltet wird, falls die Erfassung der Aktivierungsparameter periodisch und/oder in Übereinstimmung mit definierbaren Kontrollparametern detektiert wird.

14. Verfahren nach einem der Ansprüche 1 bis 13, **dadurch gekennzeichnet, dass** mittels der Interventionsmittel (40) basierend auf den detektierten Interventionsereignissen automatisierte Notfallvorrichtungen und/oder geldwertbasierte Übertragungsmodule aktiviert werden.

15. Automatisiertes Notfallinterventionssystem (80) für Betriebsstörungen bei Transportmittel (41), wobei das Notfallinterventionssystem (80) eine Sensorik (401) zum Detektieren sich ereignenden Betriebsstörungen, Interventionsmittel (40) zur automatisierten Behebung der Betriebsstörung und eine Aktivierungsvorrichtung (203) zum Generieren und selektiven Übertragen von Aktivierungssignaldaten auf ein bestimmtes Interventionsmittel (40) umfasst, falls eines mittels der Sensorik (401) detektiertes Betriebsstörungsereignis eintritt, **dadurch gekennzeichnet,**
**dass** das Notfallinterventionssystem (80) ein geschütztes Speichermodul (201) mit einem ersten inkrementierbaren Stapelspeicher (202) umfasst, welcher Stapelspeicher (202) einem oder mehreren Transportmittel (41) zuordnet ist, wobei mittels eines Interfacemodul des Notfallinterventionssystem (80) vorbestimmte Aktivierungsparameter von einer ersten Netzwerkeinheit periodisch über ein Netzwerk (50) auf das Notfallinterventionssystem (80) übertragbar sind und wobei das Notfallinterventionssystem (80) Mittel (203) zum Inkrementieren des Stapelspeichers (202) basierend auf dem übertragenen Aktivierungsparameter umfasst,
**dass** die Interventionsvorrichtung (80) ein geschütztes Ergänzungsspeichermodul (101) mit einem zweiten inkrementierbaren Stapelspeicher (102) und einer Lookup-Table (103) umfasst, wobei mittels des Interfacemodul Ergänzungsparameter von einer Vielzahl von zweiten Netzwerkeinheiten (31,...,34) über das Netzwerk (50) auf das Notfallinterventionssystem (80) übertragbar sind,
**dass** die Ergänzungsparameter mindestens Identifikationsdaten der jeweiligen zweiten Netzwerkeinheit (31,...,34) und einen benutzerspezifischen Ergänzungsfaktor umfassen, wobei der zweite Stapelspeicher (102) mittels des Ergänzungsfaktor inkrementierbar ist und der Ergänzungsfaktor und die jeweiligen Identifikationsdaten mittels Lookup-Table (103) als Wertepaar einander zugeordnet abspeicherbar sind,
**dass** die Notfallinterventionsvorrichtung (80) ein Schaltmodul (104) zum Detektieren eines kumulierten Stapelspeicherhöhenwertes der beiden Stapelspeicher (102/202) und zum Freischalten der Aktivierungsvorrichtung (203) umfasst, falls ein definierter kumulierter Stapelspeicherhöhenwerte erreicht ist,
**dass** die Aktivierungsvorrichtung (203) ein Korrelationsmodul (90) zum Generieren mindestens eines Betriebstörungsparameter und zum Dekrementieren der beiden Stapelspeicher (102/202) mittels des Betriebstörungsparameter umfasst, wobei der Betriebstörungsparameter mittels des Korrelationsmoduls (90) basierend auf der Aktivierung der Interventionsmittel (40) und der Lookup-Table quantitativ gewichtet (901) ist,
**dass** die Notfallinterventionssystem (80) ein Clearingmodul umfasst, wobei die Ergänzungsparameter mittels des Clearingmoduls nach Ablauf eines vordefinierbaren Zeitfenster basierend auf einem ausgelesenen kumulierten Stapelspeicherhöhenwert der beiden Stapelspeicher (102/202) und den Wertepaare der Lookup-Table (103) generierbar sind und über das Interfacemodul (30) auf die jeweiligen zweiten Netzwerkeinheiten (31,...,34) übertragbar sind und wobei nach Übertragung mittels des Schaltmodul (104) die Freischaltung der Aktivierungsvorrichtung unterbrochen ist.

16. Notfallinterventionssystem (80) nach Anspruch 15, **dadurch gekennzeichnet, dass** Notfallinterventionssystem (80) zur automatisierten Notfallintervention bei Betriebsstörungen des einen oder mehreren Transportmittels (41) mittels einer Kontroll- und/oder Alarmvorrichtung (402) uni- oder bidirektional mit dem einen oder mehreren Transportmittel (41) verbunden ist.

17. Notfallinterventionssystem (80) nach Anspruch 16, **dadurch gekennzeichnet, dass** die Erfassungsvorrichtung (401) ein Ortserfassungsmodul umfasst, mittels welchen Ortskoordinatenparameter des aktuellen Standortes des Transportmittels (41) generierbar sind und mittels der Kontroll- und/oder Alarmvorrichtung (402) des einen oder mehreren Transportmittels (41) an die Notfallinterventionssystem (80) übermittelbar ist.

18. Notfallinterventionssystem (80) nach einem der Ansprüche 15 bis 17, **dadurch gekennzeichnet, dass** das Notfallinterventionssystem (80) ein erstes Auslesemodul (204) zum Generieren eines ersten Stapelspeicherhöhenwertes entsprechend der aktuellen Stapelspeicherhöhe des ersten inkrementierten Stapelspeichers (202) umfasst, wobei basierend auf dem ersten Stapelspeicherhöhenwert der erste inkrementierbare Stapelspeicher (202) mittels eines ersten Addermoduls (205) zusätzlich inkrementierbar ist.

19. Notfallinterventionssystem (80) nach Anspruch 18, **dadurch gekennzeichnet, dass** das erste Auslesemodul (205) Mittel zum Generieren des ersten Stapelspeicherhöhenwertes in Real-Time umfasst.

20. Notfallinterventionssystem (80) nach einem der Ansprüche 18 oder 19, **dadurch gekennzeichnet, dass** die Notfallinterventionssystem (80) eine Timereinheit (206) umfasst, wobei der erste Stapelspeicherhöhenwerte innerhalb eines definierbaren Zeitfensters periodischen erzeugbar ist.

21. Notfallinterventionssystem (80) nach einem der Ansprüche 18 bis 20, **dadurch gekennzeichnet, dass** das Interfacemodul (30) Mittel zum geschützten bi- oder unidirektionalen Übertragen von Inkrementierungsparametern umfasst, wobei die Aktivierungsparameter spezifischen Identifikationsdaten mittels der Lookup-Table (103) zuordenbar sind.

22. Notfallinterventionssystem (80) nach einem der Ansprüche 15 bis 21, **dadurch gekennzeichnet, dass** die Notfallinterventionssystem (80) ein zweites Auslesemodul (105) zum Generieren eines zweiten Stapelspeicherhöhenwertes entsprechend der aktuellen Stapelspeicherhöhe des zweiten inkrementierbaren Stapelspeichers (102) umfasst, wobei basierend auf dem zweiten Stapelspeicherhöhenwert mittels eines zweiten Addermoduls (106) der zweite inkrementierbare Stapelspeicher (102) zusätzlich inkrementierbar ist.

23. Notfallinterventionssystem (80) nach Anspruch 22, **dadurch gekennzeichnet, dass** das zweite Auslesemodul (105) Mittel zum Generieren des zweiten Stapelspeicherhöhenwertes in Real-Time umfasst.

24. Notfallinterventionssystem (80) nach einem der Ansprüche 22 oder 23, **dadurch gekennzeichnet, dass** die Notfallinterventionssystem (80) eine Timereinheit (107) umfasst, wobei der zweite Stapelspeicherhöhenwert innerhalb eines definierbaren Zeitfensters periodischen erzeugbar ist.

25. Notfallinterventionssystem (80) nach einem der Ansprüche 15 bis 24, **dadurch gekennzeichnet, dass** die Notfallinterventionssystem (80) ein Netzwerkinterface (301) umfasst, wobei mittels des Netzwerkinterfaces (301) auf mindestens eine dezentralisierte Datenbank mit zugeordneten Börsenparametern zugreifbar ist.

26. Notfallinterventionssystem (80) nach einem der Ansprüche 15 bis 25, **dadurch gekennzeichnet, dass** das Ergänzungsspeichermodul (101) einen vom ersten Stapelspeicher (102) getrennten Speicherbereich umfasst, wobei mittels der Lookup-Table (103) geschützte Teile des ersten Stapelspeichers (102) dem getrennten Stapelspeicher zuordenbar ist.

27. Notfallinterventionssystem (80) nach einem der Ansprüche 15 bis 26, **dadurch gekennzeichnet, dass** das Zählermodul (104) einen integrierten Oszillator umfasst, mittels welchem Oszillator ein elektrisches Taktsignal mit einer Referenzfrequenz erzeugbar ist, wobei basierend auf dem Taktsignal der Zähler periodisch erhöhbar ist.

28. Notfallinterventionssystem (80) nach einem der Ansprüche 15 bis 27, **dadurch gekennzeichnet, dass** die Aktivierungsvorrichtung (203) zum Aktivieren der Interventionsmittel (40) ein Steuermodul umfasst, mittels welchem die Aktivierungsvorrichtung (203) nur freischaltbar ist, falls die Erfassung der Aktivierungsparameter periodisch detektierbar ist.

29. Notfallinterventionssystem (80) nach einem der Ansprüche 15 bis 28, **dadurch gekennzeichnet, dass** die Interventionsmittel (40) automatisierte Notfallvorrichtungen und/oder geldwertbasierte Übertragungsmodule umfassen.
